# EUROPEAN PATENT APPLICATION

(11) **EP 2 497 686 A1**
(43) Date of publication of application: **12.09.2012**
(21) Application number: 12158838.8
(22) Date of filing: 09.03.2012
(51) Int. Cl.: B60P 3/40, F03D 1/00

(54) **A transportation method for a wind turbine blade**

(30) Priority: 11.03.2011 DK 201170118
(71) Applicant: Envision Energy (Denmark) ApS, 8600 Silkeborg (DK)
(72) Inventor: Rebsdorf, Anders Varming, 8660 Skanderborg (DK)
(74) Representative: Nielsen, Leif

(57) **Abstract**

A method of transporting a wind turbine blade is described, wherein the blade comprises an inner extender section and an outer blade section. The inner extender section is approximately half the length of the outer blade section, and the method comprises securing a pair of inner extender sections together to form an extender transport section, which can be more easily transported as it is approximately the same length as an outer blade section.

## Description

### Field of the Invention

The present invention relates to a method of transporting a wind turbine blade, in particular a wind turbine blade comprising an inner blade extender and an outer blade section.

### Background of the Invention

As wind turbine sizes increase, it is common for wind turbine to utilise wind turbine blades of considerable length, e.g. blades of 60 metres length. The transportation of wind turbine blades for such large-scale wind turbines introduces significant logistical problems to the operation of wind turbine transportation and erection.

Several countries impose length restrictions on transported articles, e.g. requiring that any item over, say, 45 metres long requires a national permit issued by the authorities for road transportation. The action of applying for and obtaining such permits can introduce substantial lead-times relating to blade transportation operations, with some jurisdictions further imposing time limits for the usage of such permits - if a permit is not used within the allotted time limit, e.g. due to an interruption in the manufacturing process or a delay in a preceding transportation stage, a new permit will then have to be applied for and issued. Such regulations can introduce additional costs into the area of wind turbine transportation and installation. As an example of costs which may be incurred, a delay in the transportation of wind turbine blades for an offshore wind turbine means that specialised installation equipment for offshore facilities may be required for longer periods, the hiring costs of which can in some cases be US$100,000 per day.

Current transportation methods involve providing individual transportation carriages, e.g. trailers, platforms, rail carriages, etc., for each wind turbine blade. In the case where blades can be provided as separate blade sections (e.g. as an inner blade extender for mounting to a wind turbine rotor hub and an outer blade section for mounting to the distal end of the inner blade extender), this results in several different transportation vehicles, and acts to increase the total transportation requirements and associated costs.

One example is disclosed in patent application WO2006/061806, which describes a method of transporting a plurality of wind turbine rotor blades.

It is an object of the invention to provide a method of transportation for wind turbine blades which provides for relatively easier transportation operations combined with reduced spatial requirements.

### Summary of the Invention

Accordingly, there is provided a method of transporting a plurality of wind turbine rotor blades, said blades having a length of at least 50 metres, wherein said blades comprise an inner blade extender and an outer blade section adapted to mount to said inner blade extender, wherein the length of said outer blade section is approximately twice the length of said inner blade extender, the method comprising the step of:
providing at least two of said blades as separate inner blade extenders and outer blade sections;
coupling a first inner blade extender to a second inner blade extender to form an extender transport section, wherein the length of said extender transport section is approximately equal to the length of said outer blade sections; and
transporting said extender transport section and said outer blade sections using a plurality of transport apparatus adapted to receive blade sections having a length approximately equal to the length of one of said outer blade sections.

As the inner blade extenders can be coupled together to form an intermediate section suitable for transporting on vehicles arranged to transport outer blade sections, this provides a simplification of the entire transportation operation, reducing the length of the sections to be transported, as well as requiring less different types of transport vehicles for the sections. Such a system results in reduced logistics requirements for the transportation of wind turbine blades, increased efficiencies, and consequently reduced overall costs.

Preferably, said inner blade extender comprises a root end for mounting to a wind turbine rotor hub and a distal end for coupling to an outer blade section, and wherein said step of coupling comprises coupling one of said root end or distal end of said first inner blade extender to one of said root end or distal end of said second inner blade extender.

As the blade extenders are roughly half the length of the outer blade sections, coupling the inner blade extenders to each other at the ends of the blade extenders provides an extender transport section which will be approximately equal in length to an outer blade section.

Preferably, the method comprises the step of providing a joining part between one of said ends of said first inner blade extender and one of said ends of said second inner blade extender, and wherein said step of coupling comprises mounting said first inner blade extender and said second inner blade extender to said joining part.

The use of a joining part or coupling device in between the two blade extenders provides an apparatus to ensure secure mounting between the blade extenders.

Preferably, said step of coupling comprises bolting said first inner blade extender and said second inner blade extender to said joining part.

Bolting the blade extenders to the joining part provides a secure coupling method, and allows for the use of existing bolting features of the extenders.

Preferably, the joining part comprises bolt circles provided on said joining part, said bolt circles corresponding to bolt circles provided at the ends of said first and second inner blade extenders, wherein said step of coupling comprises bolting said inner blade extenders to said joining part using bolts extending through the bolt circle provided at the end of inner blade extender, said bolts further extending through the bolt circle provided on said joining part.

As the bolt circles of the joining part correspond with and are in register with the bolt circles of the extenders, this provides a simple and reliable coupling mechanism between the joining part and the extenders.

Preferably, the bolt circle diameter of the joining part is equal to the bolt circle diameter of an end of said inner blade extender.

As the joining part is configured to correspond to the bolt circle diameter of the blade extender, this allows for the coupling of the extender to the joining part without the need for dedicated joining apparatus.

In one embodiment, the joining part comprises a first bolt circle having a first bolt circle diameter corresponding to the bolt circle diameter of the root end of said inner blade extender, the joining part further comprising a second bolt circle having a second bolt circle diameter corresponding to the bolt circle diameter of the distal end of said inner blade extender, wherein said step of coupling comprises bolting the root end of said first inner blade extender to the first bolt circle of said joining part and bolting the distal end of said second inner blade extender to the second bolt circle of said joining part to form said blade extender section.

In this embodiment, the joining part can be arranged such that a distal end of one blade extender can be coupled to the root end of a second blade extender. To this end, as the root end has a different diameter to the distal end, consequently the bolt circles have a different diameter, and the joining part is configured accordingly.

Preferably, said rotor blades are partial pitch rotor blades having a pitch system provided at the distal end of said inner blade extender, and wherein said step of transporting comprises supporting said extender transport sections such that said pitch systems are unloaded during transportation.

By arranging the transport of the extender transport sections such that the pitch systems are unloaded, this means that excessive wear and tear is prevented from affecting the pitch systems and enclosed bearings, e.g. standstill marks in the bearing rings of a pitch system. This can be particularly useful in situations wherein the extender transport sections are transported or stored for long periods of time.

Preferably, said step of supporting comprises supporting said first inner blade extender at the centre point of mass of the first inner blade extender and supporting said second inner blade extender at the centre of mass of the second inner blade extender.

Supporting the sections at the centre of mass of each blade ensures that the blades are not being transported in an out-of-balance arrangement, thereby preventing loading and associated wearing on the pitch systems during transport.

Preferably, said step of coupling comprises coupling said root end of said first inner blade extender to said root end of said second inner blade extender.

By coupling the root ends of the extender sections together, the pitch systems are provided at either ends of the extender transport section, and are not impacted on by external loads

Alternatively, said step of coupling comprises coupling said distal end of said first inner blade extender to said distal end of said second inner blade extender.

In this case, as the pitch systems are provided at the coupling junction between the two extenders, they can be locked into position and prevented from moving during transport.

Preferably, said step of providing comprises providing inner blade extenders having a length of approximately 20 metres, and outer blade sections having a length of approximately 40 metres.

By providing blade sections of such dimensions, accordingly the resultant outer blade sections and extender transport sections which are to be transported are of a relatively short length, and can relatively easily be transported without permit in most jurisdictions.

Preferably, said step of transporting comprises arranging a first extender transport section adjacent a second extender transport section or a first outer blade section on a first transport apparatus.

As the extender transport section is approximately the same length as an outer blade section, this means that extender transport sections and outer blade sections can be transported side-by-side on the same transport vehicle. This reduces the logistical requirements for the transportation operation.

In one embodiment, said step of coupling comprises directly mounting said first inner blade extender to said second inner blade extender.

It will be understood that the inner blade extenders may be directly mounted to each other, i.e. without the usage of a joining part. This can be facilitated through the identical bolt circles provided on the extenders, which are provided for mounting the extenders to a wind turbine rotor hub or to an outer blade section.

It will be understood that said transport apparatus may comprise any suitable arrangement of road, rail or water vehicles.

### Description of the Invention

Embodiments of the invention will now be described, by way of example only, with reference to the accompanying drawings, in which:
Fig. 1 illustrates a first embodiment of a method for transporting a wind turbine blade according to the invention;
Fig. 2 illustrates the transportation of an outer blade section approximately equivalent in length to the extender transport section of Fig. 1; and
Fig. 3 illustrates a second embodiment of a method for transporting a wind turbine blade according to the invention.

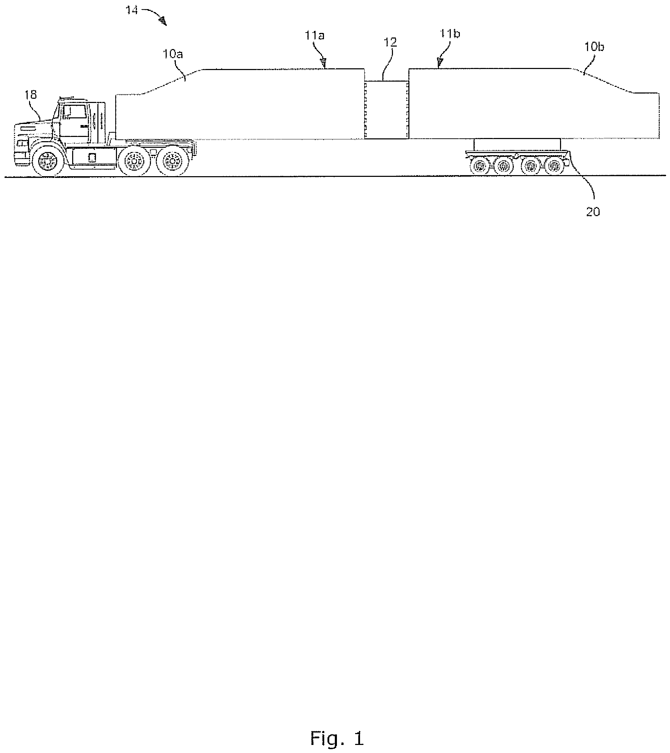

With reference to Figs. 1-2, a method of transporting a wind turbine blade is illustrated. Fig. 1 shows a method for transporting a pair of inner blade extenders 10a,10b for a wind turbine blade. The first and second extenders 10a,10b are coupled together via a joining piece 12, the joining piece 12 provided between the respective distal ends 11a, 11b of the extenders 10a, 10b.

The extenders 10a, 10b comprise a bolt circle arrangement (not shown) provided at the respective distal ends 11a, 11b for coupling to wind turbine components (e.g. an outer blade section). Preferably, the joining piece 12 comprises a bolt circle defined thereon of equal dimensions to the bolt circles of the extenders 10a, 10b. Accordingly, joining piece 12 may be arranged such that the bolt circle of the joining piece is in line with the bolt circle of the distal end 11a, 11b of the extenders 10a, 10b. The first extender 10a is then coupled to the joining piece 12 by bolting the joining piece 12 to the distal end 11a of the extender 10a via said bolt circles, without the need for specialist coupling equipment.

Similarly, the second extender 10b is coupled to the joining piece 12 by bolting the joining piece 12 to the distal end 11b of the extender 10b via the bolt circles provided on the second extender 10b.

The securing together of the two extenders 10a,10b results in the creation of an intermediate extender transport section, indicated generally at 14.

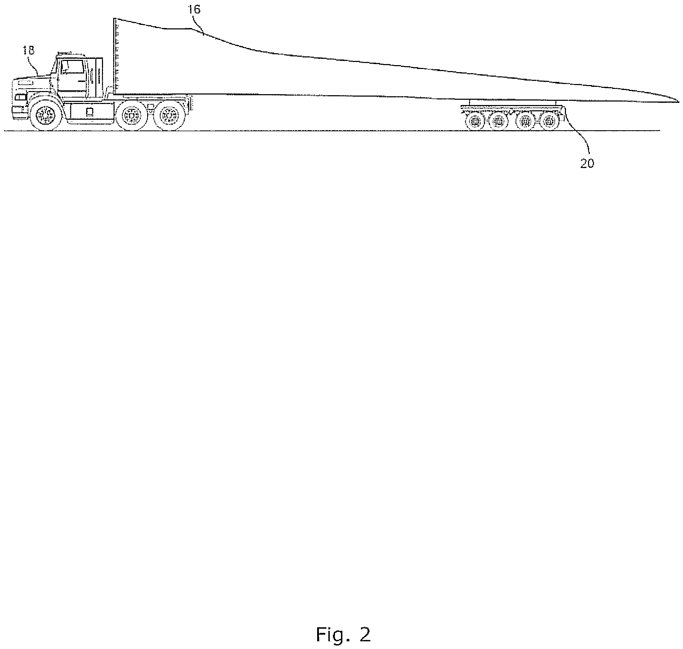

The extenders 10a,10b are arranged such that the length of an extender 10a,10b is approximately half the length of an associated outer blade section (16, Fig. 2). Accordingly, the length of the extender transport section 14 is approximately equal to the length of an associated outer blade section 16.

As the extender transport section 14 and the outer blade section 16 are approximately the same length, then the extender transport section 14 can be transported using the same transport vehicles used to transport the outer blade sections 16.

In Figs. 1 and 2, the transport vehicles comprise a truck 18 and a separate support platform 20, which can be used to carry the extender transport section 14 and the outer blade section 16. The sections 14,16 may be mounted to the transport apparatus 18,20 using any suitable known configurations.

As the sections 14,16 are substantially the same length, it will be understood that more than one section 14,16 may be transported on a single transport apparatus 18,20, e.g. the extender transport section 14 of Fig. 1 may be provided adjacent a second extender transport section or adjacent an outer blade section. As sections may be transported side-by-side without significant reconfiguration of the transport apparatus, this can reduce the logistical requirements for transportation.

For a two-bladed wind turbine, only three separate sections 14,16 need to be transported, i.e. a single extender transport section and two outer blade sections. These can be transported in any suitable configuration, for example a first transport apparatus can carry an extender transport section and at least one of the outer blade sections adjacent to the extender transport section. Importantly, the transport apparatus used can be interchangeable, and may be used for either the outer blade sections or the extender transport sections, providing for economies of scale in transportation logistics.

This is in contrast to prior art systems, which would require potentially four separate transport apparatus (two for the inner blade extenders and two for the outer blade sections), or at least two differently dimensioned transport apparatus (i.e. one apparatus arranged to receive an inner blade extender and the other arranged to receive an outer blade section).

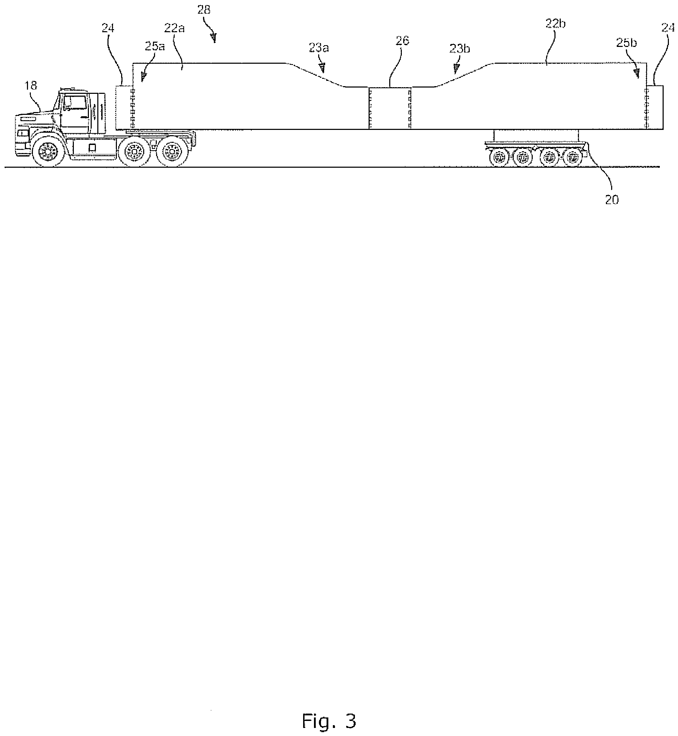

Fig. 3 illustrates a second embodiment of a method for transporting wind turbine blades, in this case transporting a pair of blade extenders 22a,22b for a partial pitch wind turbine blade. In a partial pitch wind turbine, the wind turbine blades comprise an inner blade extender 22a,22b mounted to a wind turbine rotor hub at the root end 23a,23b of the extender 22a,22b, and an outer blade section 16 mounted to the distal end 25a,25b of the inner blade extender 22a,22b, the outer blade section operable to pitch relative to the inner blade extender. In general, a pitch system 24 is provided at the distal end 25a,25b of the inner blade extender 22a,22b, with the outer blade section 16 mounted to said pitch system.

The total partial pitch blade has a length of approximately 60 metres, comprising an inner extender section of approximately 20 metres and an outer blade section of approximately 40 metres. The sections of the partial pitch blade may be manufactured separately, and transported individually to the wind turbine site.

In the embodiment of Fig. 3, similar to the embodiment of Fig. 1, a joining part 26 is provided between the two extenders 22a,22b, but in this case the root ends 23a,23b of the extenders 22a,22b are coupled to the joining part 26 to form the extender transport section 28. Such an arrangement allows for the pitch systems 24 of the extenders 22a,22b to be positioned at either end of the extender transport section 28, so that the pitch systems 24 are free and unloaded during transport and associated storage. This results in reduced wear-and-tear on the pitch systems 24 themselves, particularly with regard to standstill marks in the pitch system bearings and runways.

As with the embodiment of Fig. 1, the extender transport section 28 of Fig. 3 is approximately of equivalent length as the associated outer blade sections 16. Accordingly, the extender transport section 28 may be transported in conjunction with outer blade sections 16 in any suitable arrangement, e.g. side-by-side with an adjacent outer blade section 16 on a single transport apparatus 18,20.

In a further enhancement of the invention, the extender transport sections 28 may be configured for transport wherein the extenders 22a,22b are supported such that pitch systems 24 provided at the distal ends 25a,25b of the extenders 22a,22b are unloaded, i.e. are not subjected to any significant forces during transportation and/or storage. In this case, the extenders 22a,22b may be transported with supports provided at the centre of mass of the extender sections 22a,22b, or at the centre of mass of the entire extender transport section 28. Such a support arrangement further reduces the possibility of signification wear-and-tear or standstill marks on the pitch systems 24 during transportation and associated storage.

It will be understood that while Figs. 1-3 illustrate a road transport configuration of first and second support platforms, the invention may also apply for transportation of wind turbine blades by any suitable transport method, e.g. rail, ocean, etc.

It will also be understood that the inner blade extenders 10a,10b,22a,22b may be transported without the use of joining parts 12,26, i.e. the extenders 10a,10b,22a,22b may be directly connected to each other to form the extender transport sections 14,28.

In other embodiments, it may be preferable to couple the distal end of a first blade extender to the root end of a second blade extender, to form an intermediate extender transport section. In such a case, the associated joining part may be configured to comprise at least two separate bolt circles, a first bolt circle corresponding to the bolt circle diameter of the distal end of said first blade extender and a second bolt circle corresponding to the bolt circle diameter of the root end of said second blade extender.

It will be understood that the invention may apply to any wind turbine blade which can be provided as an inner section and an outer section, the inner section approximately half the length of the outer section, to provide a more efficient and simplified transportation option.

The invention is not limited to the embodiments described herein, and may be modified or adapted without departing from the scope of the present invention.

## Claims

1. A method of transporting a plurality of wind turbine rotor blades, said blades having a length of at least 50 metres, wherein said blades comprise an inner blade extender (10a, 10b, 22a, 22b) and an outer blade section (16) adapted to mount to said inner blade extender (10a, 10b, 22a, 22b), wherein the length of said outer blade section (16) is approximately twice the length of said inner blade extender (10a, 10b, 22a, 22b), the method comprising the step of:
providing at least two of said blades as separate inner blade extenders (10a, 10b, 22a, 22b) and outer blade sections (16);
coupling a first inner blade extender (10a, 22a) to a second inner blade extender (10b, 22b) to form an extender transport section (14, 28), wherein the length of said extender transport section (14, 28) is approximately equal to the length of said outer blade sections (16); and
transporting said extender transport section (14, 28) and said outer blade sections (16) using a plurality of transport apparatus (18, 20) adapted to receive blade sections (14, 28, 16) having a length approximately equal to the length of one of said outer blade sections (16).

2. A method as claimed in claim 1, wherein said inner blade extender (10a, 10b, 22a, 22b) comprises a root end (23a, 23b) for mounting to a wind turbine rotor hub and a distal end (11a, 11b) for coupling to an outer blade section (16), and wherein said step of coupling comprises coupling one of said root end (23a, 23b) or distal end (11a, 11b) of said first inner blade extender (10a, 22a) to one of said root end (23a, 23b) or distal end (11a, 11b) of said second inner blade extender (10b, 22b).

3. A method as claimed in claim 2, wherein the method comprises the step of providing a joining part (12, 26) between one of said ends (11a, 11b, 23a, 23b) of said first inner blade extender (10a, 22a) and one of said ends (11a, 11b, 23a, 23b) of said second inner blade extender (10b, 22b), and wherein said step of coupling comprises mounting said first inner blade extender (10a, 22a) and said second inner blade extender (10b,22b) to said joining part (12,16).

4. A method as claimed in claim 3, wherein said step of coupling comprises bolting said first inner blade extender (10a, 22a) and said second inner blade extender (10b, 22b) to said joining part (12, 16).

5. A method as claimed in any one of claims 2-4, wherein said rotor blades are partial pitch rotor blades having a pitch system provided at the distal end (11a, 11b) of said inner blade extender (10a, 10b, 22a, 22b), and wherein said step of transporting comprises supporting said extender transport sections (14, 28) such that said pitch systems are unloaded during transportation.

6. A method as claimed in claim 5, wherein said step of supporting comprises supporting said first inner blade extender (10a, 22a) at the centre point of mass of the first inner blade extender (10a, 22a) and supporting said second inner blade extender (10b, 22b) at the centre of mass of the second inner blade extender (10b, 22b).

7. A method as claimed in claim 5 or claim 6, wherein said step of coupling comprises coupling said distal end (11a) of said first inner blade extender (10a, 22a) to said distal end (11b) of said second inner blade extender (10b, 22b).

8. A method as claimed in any one of claims 1-7, wherein said step of providing comprises providing inner blade extenders (10a, 10b, 22a, 22b) having a length of approximately 20 metres, and outer blade sections (16) having a length of approximately 40 metres.

9. A method as claimed in any one of claims 1-8, wherein said step of transporting comprises arranging a first extender transport (14, 28) section adjacent a second extender transport section (14', 28') or a first outer blade section (16) on a first transport apparatus (18,20).

10. A method as claimed in any one of claims 1-2, wherein said step of coupling comprises directly mounting said first inner blade extender (10a, 22a) to said second inner blade extender (10b, 22b).
